# EUROPÄISCHE PATENTSCHRIFT

(11) **EP 4 180 280 B1**
(45) Veröffentlichungstag und Bekanntmachung des Hinweises auf die Patenterteilung: **22.05.2024**
(21) Anmeldenummer: 21208275.4
(22) Anmeldetag: 15.11.2021
(51) Int. Cl.: B60S 3/04

(54) **COMPUTERIMPLEMENTIERTES VERFAHREN ZUR BEWERTUNG EINER FAHRZEUGWASCHANLAGE, SYSTEM ZUR ÄNDERUNG VON PROZESSDATEN EINER FAHRZEUGWASCHANLAGE UND STEUERMODUL FÜR EIN SOLCHES SYSTEM**
COMPUTER IMPLEMENTED METHOD TO EVALUATE A VEHICLE WASHING INSTALLATION, SYSTEM TO ALTER PROCESS DATA OF A VEHICLE WASHING INSTALLATION AND CONTROL MODULE FOR SUCH A SYSTEM
PROCÉDÉ MIS EN OEUVRE PAR ORDINATEUR POUR ÉVALUER UNE INSTALLATION DE LAVAGE DE VÉHICULES, SYSTÈME POUR MODIFIER LES DONNÉES DE PROCESSUS D'UNE INSTALLATION DE LAVAGE DE VÉHICULES ET MODULE DE COMMANDE POUR UN TEL SYSTÈME

(43) Veröffentlichungstag der Anmeldung: 17.05.2023
(73) Patentinhaber: WashTec Holding GmbH, 86153 Augsburg (DE)
(72) Erfinder: MAYER, Stefan, 86356 Neusäß (DE); FÖRG, Oliver, 86199 Augsburg (DE); STECHER, David, 86653 Monheim (DE)
(74) Vertreter: Schwarz, Claudia

(56) Entgegenhaltungen:
- EP-A2- 3 671 591
- US-A1- 2012 253 973
- US-A1- 2017 121 019
- US-A1- 2020 198 594

## Beschreibung

Die vorliegende Erfindung liegt auf dem Gebiet der Fahrzeugwaschanlagen und betrifft eine dezentrale Qualitätsverbesserung und insbesondere ein Verfahren, ein System zur Änderung von Prozessdaten einer Waschanlage und ein Computerprogramm.

Das Dokument US 2017/121019 A1 beschreibt einen Drohnen-artigen Smart-Autowaschroboter, der eine Verschmutzungszustands-Information und eine Umriss-Information eines Fahrzeugs im unbemannten Flug um das Fahrzeug herum entdecken kann. Eine Flugbahn für die Autowäsche kann aus den beiden Informationen berechnet werden.

Das Dokument US 2012/253973 A1 beschreibt ein Geschäftsmodell zur Kundenbindung an eine Marke oder Kette von Autowaschanlagen. Ein Kunde benutzt ein Smartphone mit einer App für Online-Bezahlungen, Auswahl eines Waschprogramms und Start des Waschprogramms, wenn sich das Auto im Eingangsbereich der Autowaschanlage befindet, und bei Bedarf eine Not-Stopp-Option.

Das Dokument US 2020/198594 A1 beschreibt den Betrieb einer autonomen Fahrzeugflotte sowie Service-Module. Service-Module sind zum äußeren und inneren Säubern des Fahrzeugs ausgebildet, wobei ein Service-Bedarf aufgrund einer Verschmutzung sowie ggf. ein Grad der Verschmutzung durch Sensoren oder durch eine Benutzereingabe, beispielsweise über ein Smartphone des Benutzers des Fahrzeugs, angezeigt werden kann. Eine Überprüfung der Qualität der automatischen Säuberung kann automatisch mittels Sensoren durch die Service-Station, an der das Service-Modul angeordnet ist, erfolgen.

Das Dokument EP 3 671 591 A2 beschreibt ein Verfahren zum Ermitteln einer Reinigung eines Fahrzeugs, wobei eine Steuereinheit eines Fahrzeugs einen Reinigungsbedarf anhand eines Verschmutzungsgrads des Fahrzeugs über eine Nutzereingabe an einen Server übermittelt. Die Reinigung findet an einer Servicestation statt. Nach der Reinigung kann eine Überprüfung mittels Kameras oder Sensoren an der Servicestation stattfinden und nach abgeschlossener Überprüfung das Fahrzeug automatisch aus der Servicestation fahren.

Bei der Wäsche von Fahrzeugen ist die Qualität der Wäsche ein wichtiger Beurteilungsmaßstab, der sowohl für Hersteller als auch für Betreiber von Waschanlagen zur Einleitung von entsprechenden Verbesserungsmaßnahmen relevant ist. Die Qualitätsbeurteilung wird typischerweise vom Kunden, also vom Fahrzeugfahrer, ausgeführt. Eine Beurteilung der Waschqualität bzw. des Waschergebnisses enthält jedoch wichtige Informationen, um z.B. den Waschablauf zu verbessern und/oder bestimmte Waschprozesse anders zu gestalten.

Bei bekannten Systemen im Stand der Technik findet eine systematische Qualitätsbewertung nicht oder nur unzureichend statt.

Aufgabe der vorliegenden Erfindung ist es deshalb, einen Weg aufzuzeigen, mit dem die Qualität einfach und systematisch und in Bezug auf Positionsdaten der Fahrzeugkarosserie erfasst werden kann. Weiterhin soll eine Analyse der erfassten Qualitätsbeurteilung in Bezug auf die jeweils beteiligten Waschaggregate möglich sein.

Diese Aufgabe wird durch die beiliegenden Patentansprüche gelöst, insbesondere durch ein computer-implementiertes Verfahren zur Bewertung einer Fahrzeugwäsche, die auf einer Waschanlage ausgeführt wurde, durch ein System und ein Computerprogramm. Weitere vorteilhafte Ausführungsformen und Weiterbildungen der Erfindung finden sich in den Unteransprüchen und der nachfolgenden Beschreibung.

In einem ersten Aspekt wird die Erfindung gelöst durch ein Computer-implementiertes Verfahren zur Bewertung einer Fahrzeugwäsche, die auf einer Waschanlage ausgeführt wurde. Das Verfahren kann z.B. auf einem mobilen Endgerät, wie z.B. auf einem Smartphone oder Tablet ausgeführt werden (z.B. App auf Handy). Das Verfahren umfasst dazu folgende Verfahrensschritte, die zumindest teilweise und bevorzugt vollständig auf einem mobilen Endgerät ausgeführt werden:
- Bereitstellen einer Mensch-Maschine-Schnittstelle, HMI, und einer Steuerschnittstelle zu einen Steuermodul der Waschanlage;
- Ausgeben von Feldern auf der HMI, die dazu dienen, zumindest ein Bewertungssignal zu erfassen, um die Wäsche zu bewerten;
- Bei Erfassen von einem negativen Bewertungssignal: Einlesen einer erzeugten interaktiven virtualisierten Darstellung des Fahrzeugs, wobei die erzeugte interaktive virtualisierte Darstellung vorzugsweise auf der HMI ausgegeben wird;
- Ausgeben einer Aufforderung auf der HMI, die beanstandeten Bereiche in der erzeugten und ausgegebenen interaktiven virtualisierten Darstellung zu aktivieren;
- Erfassen von Aktivierungssignalen in der interaktiven virtualisierten Darstellung;
- Einlesen von Identifikationssignalen zur Identifikation der beanstandeten Bereiche auf dem Fahrzeug auf Basis der erfassten Aktivierungssignale; die Identifikation kann lokal auf dem mobilen Endgerät (im Rahmen einer dort installierten Applikation) oder auf einem in Datenverbindung stehenden Server ausgeführt werden;
- Erzeugen von Rückmeldungssignalen zur Weiterleitung an das Steuermodul über die Steuerschnittstelle, wobei die Rückmeldungssignale die identifizierten beanstandeten Bereiche auf dem Fahrzeug encodieren.

Auf Basis der Rückmeldungssignale kann das Steuermodul dann mittels eines Identifikationsalgorithmus die beteiligen Arbeitsaggregate ermitteln, die bei der Reinigung der beanstandeten Bereiche (indiziert in dem Rückmeldungssignal) beteiligt waren. Für die ermittelten Arbeitsaggregate können automatisch und/oder regelbasiert Wartungsmaßnahmen eingeleitet werden.

In einer bevorzugten Ausführungsform der Erfindung ist die erzeugte interaktive virtualisierte Darstellung des Fahrzeugs fahrzeugtyp-spezifisch oder fahrzeug-spezifisch bzw. fahrzeug-individuell. Die fahrzeugtyp-spezifische Erzeugung der interaktiven virtualisierten Darstellung kann auf einem Fahrzeugtypdatensatz basieren, der von einer Applikation auf dem mobilen Endgerät erfasst wurde (z.B. durch Eingabe auf einem Eingabefeld auf dem HMI). Die fahrzeug-spezifische Erzeugung der interaktiven virtualisierten Darstellung kann zusätzlich noch auf Sensorsignalen einer optischen Erfassungseinrichtung (z.B. Kamera, LIDAR Sensoren) basieren, in denen das Fahrzeug abgebildet ist. Die erfassten Sensorsignale können auch für spätere Anwendungen in einem Speicher gespeichert und zugreifbar sein.

In einer weiteren bevorzugten Ausführungsform der Erfindung kann das Erzeugen der interaktiven virtualisierten Darstellung des Fahrzeugs in Antwort auf Sensordaten und/oder unter Zugriff auf ein gespeichertes Featuremodell erfolgen, das die Kontur des betreffenden Fahrzeugs oder Fahrzeugtyps repräsentiert oder codiert und dabei markante geometrische Merkmale des Fahrzeugs kennzeichnet, insbesondere in Antwort auf einen erfassten Fahrzeugmodelldatensatz und einen erfassten Baujahrdatensatz. Damit wird es möglich, die virtualisierte Darstellung möglichst realitätsnah mittels einer Render Engine zu rendern und dabei die jeweiligen Features des Fahrzeugs (Spoiler, Spiegel, Übergröße Radkasten, Dachbox) in virtualisierter Form darzustellen.

In einer weiteren bevorzugten Ausführungsform der Erfindung können die Rückmeldungssignale Statussignale umfassen, die die ausgeführte Wäsche spezifizieren. Statussignale können z.B. die Waschaggregate spezifizieren, die für die Fahrzugwäsche verwendet worden sind und ggf. weitere Parameter (Zeitangaben, wann und wie lange etc.), den Waschablauf bzw. das angewendete Waschprogramm.

In einer weiteren bevorzugten Ausführungsform der Erfindung können die Rückmeldungssignale Metainformationen zur ausgeführten Wäsche, zum Fahrzeug, zur Waschanlage, mit der die Wäsche ausgeführt worden ist und/oder zu den Bewertungen umfassen. Die Metainformationen können z.B. spezifizieren, welches Waschprogramm bei der zu bewertenden Wäsche angewendet worden ist und wie oft es an diesem Tag bereits für anderen Wäschen angewendet wurde. Die Metainformationen können z.B. spezifizieren, welche Kontur (Umrisse, wie Länge, Breite, Höhe) das gewaschene Fahrzeug hatte und/oder wie das Fahrzeug in der Waschanlage positioniert war (erfasst durch Sensorik, wie Lichtschranken oder weitere optischen Sensoren etc.).

In einer weiteren bevorzugten Ausführungsform der Erfindung kann ein adaptives Dialogmenü auf dem HMI zur Spezifikation der Bewertungen bereitgestellt werden, das insofern "adaptiv" ist, als dass es auf Basis der erfassten Bewertungssignale und/oder in Antwort auf weitere auf der HMI erfasste Signale erzeugt wird. Mit anderen Worten kann ein adaptiver Dialog implementiert werden, der auf der Verarbeitung der erfassten Bewertungssignale und vorkonfigurierbaren Regeln, die in einer über ein Netzwerk zugreifbaren Regelbasis gespeichert sein können, erzeugt wird.

In einer bevorzugten Ausführungsform der Erfindung wird erfasst und algorithmisch differenziert, ob es sich bei dem Bewertungssignal um ein positives oder um ein negatives Bewertungssignal handelt. In einer ersten Ausführungsform der Erfindung kann die interaktive virtualisierte Darstellung nur dann erzeugt werden, wenn ein negatives Bewertungssignal erfasst worden ist, um dem Anwender Gelegenheit zu geben, Bereiche des Fahrzeugs hinsichtlich der Waschqualität zu beanstanden. Positive Bewertungen gelten dann generell für die gesamte Wäsche, so dass die interaktive virtualisierte Darstellung nicht erzeugt und/oder ausgegeben werden muss. In einer zweiten Ausführungsform der Erfindung kann die interaktive virtualisierte Darstellung auch dann erzeugt werden, wenn ein positives Bewertungssignal erfasst worden ist, um dem Anwender Gelegenheit zu geben, Bereiche des Fahrzeugs hinsichtlich der Waschqualität positiv zu bewerten.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die vorrichtungsbasierten Ansprüche (die beispielsweise auf ein Steuermodul oder auf ein Computerprogramm gerichtet sind) mit den Merkmalen weitergebildet sein, die in Zusammenhang mit dem System beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend im Zusammenhang mit dem System beschriebenen bevorzugten Ausführungsform der Erfindung werden nicht explizit für die Vorrichtung wiederholt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Speichern" von Daten mit einer Speichereinheit und entsprechenden Anweisungen zum Schreiben von Daten in den Speicher durchgeführt werden. Um Redundanz zu vermeiden, wird die Vorrichtung deshalb nicht noch einmal explizit beschrieben, obwohl es auch in den alternativen Ausführungsformen, die in Bezug auf das System beschrieben sind, verwendet werden kann.

In einem weiteren Aspekt betrifft die Erfindung ein System zur Änderung von Prozessdaten einer Waschanlage auf Basis von erfassten Bewertungen von Fahrzeugwäschen, die auf der Waschanlage ausgeführt wurden, mit:
- Einer Menge von mobilen Endgeräten, die jeweils ausgebildet sind, ein Verfahren, wie vorstehend beschrieben, auszuführen;
- Einem Steuermodul, das auf der Waschanlage implementiert ist und zur Steuerung und/oder Regelung der Waschanlage auf Basis der erfassten Rückmeldungssignale, die Bewertungen von auf der Waschanlage ausgeführten Fahrzeugwäschen encodieren, dient und das über die Steuerschnittstelle mit den mobilen Endgeräten in Datenaustausch steht.

In einer bevorzugten Ausführungsform der Erfindung kann das System weiterhin eine zentrale Verarbeitungseinheit umfassen, die in Datenaustausch mit den jeweiligen Steuermodulen der Waschanlagen einer Mehrzahl von Waschanlagen steht und die dazu ausgebildet ist, auf Basis der Rückmeldungssignale für die Mehrzahl von Waschanlagen, Regelgrößen für die Mehrzahl von Waschanlagen zu ermitteln.

Die zentrale Verarbeitungseinheit kann z.B. auf einem Server (z.B. über das Internet zugreifbar, als Cloud-Server) implementiert sein. Die zentrale Verarbeitungseinheit ist einer Mehrzahl von Waschanlage strukturell übergeordnet. Alternativ oder kumulativ können auch mehrere Maschinen ihre Rückmeldungssignale fahrzeugspezifisch, aber waschanlagenübergeordnet, z.B. in einem Fahrzeugfeaturemodell (das als Normkollektiv fungiert) speichern bzw. sammeln.

Die Bewertung der Wäsche durch den Kunden erfolgt vorzugsweise in der App. Die algorithmische Auswertung der erfassten Aktivierungssignale und der daraus erzeugten Rückmeldungssignale kann grundsätzlich lokal auf der Maschine und insbesondere in dem Steuermodul ausgeführt werden. Die lokale Auswertung auf der Maschine kann unter Verwendung von lokalen (also Waschanlagen-spezifischen, aber Fahrzeugübergreifenden) Referenzdaten erfolgen. Die Auswertung kann fahrzeugtypspezifisch oder fahrzeugspezifisch erfolgen.

Alternativ oder kumulativ kann die Auswertung der Aktivierungssignale und der berechneten Rückmeldungssignale, die eine Bewertung der ausgeführten Wäsche encodieren, zentral auf einer zentralen Verarbeitungseinheit ausgeführt werden. Dies bietet die Möglichkeit von weiteren Auswertungen insbesondere einen Vergleich mit zentralen Referenzwerten von anderen Maschinen. Wenn sich die Reklamationen auf der Waschanlage fahrzeugspezifisch häufen, sind die hinterlegten Waschabläufe schlecht optimiert. Wenn sich die Reklamationen anlagenspezifisch häufen (also für eine bestimmte Anlage aus einer Menge von Anlagen), ist die Anlage schlecht eingestellt oder defekt. Dies kann von der zentralen Verarbeitungseinheit erfasst werden und an die jeweilige Waschanlage zurückübermittelt werden.

Die Rückmeldungssignale werden von der App über eine drahtlose Netzwerkschnittstelle an zumindest eine externe Instanz gesendet.

Zur Verarbeitung der Rückmeldungssignale gibt es mehrere Implementierungsmöglichkeiten:
1. Die App sendet die Rückmeldungssignale an das Steuermodul, das auf der jeweiligen Waschanlage installiert ist und zugleich an die zentrale Verarbeitungseinheit. Alternativ:
2. Die App sendet die Rückmeldungssignale (nur) an das jeweilige Steuermodul der Waschanlage und dieses fungiert quasi als Gateway und schleift die erfassten Rückmeldungssignale durch bzw. weiter an die zentrale Recheneinheit zur weiteren Verarbeitung. Alternativ:
3. Die App sendet die Rückmeldungssignale nur an eine zentrale Verarbeitungseinheit zur weiteren Verarbeitung. Dies ist eine bevorzugte Ausführungsform der Erfindung.

In einer bevorzugten Ausführungsform der Erfindung ist die zentrale Verarbeitungseinheit dazu ausgebildet, die Rückmeldungssignale von mehreren Endgeräten in Bezug auf unterschiedliche Waschanlagen auszuwerten und insbesondere zur vergleichenden Auswertung aller Waschanlagen auszuwerten, so dass für jeweils eine Waschanlage Benchmark-Werte für jeweils eine Wäsche und/oder für Programmabschnitte einer Wäsche ermittelt werden, die von der zentralen Verarbeitungseinheit an eine Instanz der jeweiligen Waschanlage übermittelt werden. Die Instanz kann die empfangenden Nachrichten an weitere Geräte weiterleiten (z.B. an ein mobiles Gerät des Betreibers oder eines Service Technikers).

In einer weiteren bevorzugten Ausführungsform können die Rückmeldungssignale zu einer individuell beanstandeten Wäsche auf dem Steuermodul und/oder der zentralen Verarbeitungseinheit mit lokalen und/oder zentralen Referenzwerten verglichen werden, um bei Abweichungen eine Abweichungsnachricht zu erzeugen und auszugeben. Im Hintergrund bzw. als Hintergrundprozess kann ein Vergleich zwischen den Rückmeldungssignalen bzw. zugeordneten Messwerten der reklamierten individuellen Wäsche mit Referenzwerten bzw. einem Normkollektiv nach (grober) Fahrzeugklasse und/oder nach Fahrzeugtyp und/oder nach Waschanlage und/oder nach einem Feature eines Featuremodells angestoßen werden, um evtl. vorliegende Fehleinstelllungen oder Defekte an der Maschine bzw. Waschanlage automatisch identifizieren zu können. Dies erfordert jedoch die Verwendung entsprechender Normwerte und erfolgt unter Verarbeitung statistischer Werte, wie z.B. Mittelwert, Varianz etc.

In einer weiteren bevorzugten Ausführungsform können die Rückmeldungssignale von mehreren Endgeräten in Bezug auf jeweils eine Waschanlage ausgewertet werden, um bei statistisch signifikanter Häufung von einem Typ von Rückmeldungssignalen, automatisch Überprüfungsmaßnahmen auf der Waschanlage einzuleiten.

In einer weiteren bevorzugten Ausführungsform können die Überprüfungsmaßnahmen einen Vergleich von Einstellwerten mit einem vorkonfigurierbaren Referenzwert oder einem Referenzwertintervall in Bezug auf den Typ des Rückmeldungssignals umfassen. Beispielsweise können Probleme bei der Gebläsetrocknung in zu hoch eingestellten Überfahrgeschwindigkeiten, zu niedriger Chemiekonzentration des Trocknungsmittels und/oder zu hoher Überfahrgeschwindigkeit und/oder zu geringen Wasssermengen bei vorherigen Abspülläufen begründet sein. Es kann aus einem Speicher der Referenzwert für die maximale Drehzahl eines Rotationsantriebsaggregates z.B. für die Portalgeschwindigkeit, eine Hubgeschwindigkeit für einen Dachtrockner oder die Leistung eines Bürstenrotationsantriebs oder der Wasserdurchfluss eines Auftragsaggregats ausgelesen werden, der mit dem Inhalt des Rückmeldungssignals abgeglichen wird. Indiziert das Rückmeldungssignal beispielsweise, dass der Wert für ein bestimmtes Rotationsantriebsaggregat verringert werden muss, so kann überprüft werden, welche Referenzwerte für die Drehzahl des jeweiligen Rotationsantriebsaggregates gespeichert sind. Falls die Überprüfung ergibt, dass die Referenzwerte auch geringer sind als der aktuelle Einstellwert, so kann automatisch eine Veränderung des aktuellen Einstellenwertes (in diesem Fall eine Verringerung) veranlasst werden.

Alternativ oder kumulativ kann eine lokale Überprüfung eines Arbeitsaggregates der Waschanlage im Rahmen einer prädiktiven Instandhaltungsprozedur auf Basis der Rückmeldungssignale ausgeführt werden. Dies basiert auf dem technischen Hintergrund, dass in der Regel davon auszugehen ist, dass eine Wartungsmaßnahme oder zumindest eine Überprüfungsmaßnahme des Antriebsaggregates zu empfehlen ist, falls es zu einer Häufung von beanstandeten Bereichen kommt, die mit dem jeweiligen Antriebsaggregat bearbeitet worden sind. In einer Konfigurationsphase kann ein Schwellenwert für die Häufung eingestellt werden, sodass beispielsweise ab einem Wert von über 1,5 % Beanstandungen in einem übereinstimmenden Bereich, automatisch eine Überprüfungsmaßnahme angestoßen und/oder ausgelöst wird.

In einer weiteren bevorzugten Ausführungsform kann das Steuermodul dazu eingerichtet sein, Prozessdaten von aktivierten Arbeitsaggregaten im Rahmen von auf der Waschanlage ausgeführten Wäschen in einem Speicher (Ringspeicher oder Datenbank) zu speichern. Alternativ oder kumulativ kann das Steuermodul weiter dazu eingerichtet sein, die von dem mobilen Endgerät über die Steuerschnittstelle empfangenen Rückmeldungssignale mit den gespeicherten Prozessdaten zu korrelieren, insbesondere positions-basiert zu korrelieren, um Überprüfungsmaßnahmen nur für ausgewählte Arbeitsaggregate einzuleiten, nämlich für solche Arbeitsaggregate, die bei der Wäsche in den beanstandeten Bereichen aktiviert worden sind.

Die Prozessdaten codieren die für die ausgeführte Wäsche aktivierten bzw. angewendeten Arbeitsaggregate. Die Prozessdaten können kumulativ noch Einstellwerte der Arbeitsaggregate umfassen, wie z.B. Dosiereinstellungen und Dosierleistung, die Leistungsaufnahme der Bürsten über die Kontur des Fahrzeugs, die Positionsgeber, Neigungssensoren sowie Zustellungswerte (z.B. der Dach- und/oder Seitenbürste) und damit deren Eintauchtiefe etc. Die Prozessdaten können alternativ oder kumulativ Metadaten zu den Arbeitsaggregaten umfasse, wie z.B. Zeitangaben (Zeitpunkt der Aktivierung), Dauer (der Aktivierung). Die Prozessdaten können kumulativ oder alternativ Füllstandsmeldungen der (chemikalischen) Waschsubstanzen umfassen. Die Füllstandsmeldungen werden aus Füllstandsdaten berechnet, die von Füllstandssensoren eingelesen werden, die in dem jeweiligen Waschsubstanzbehältnis angeordnet sind. Wenn nicht ausreichend Waschsubstanz vorhanden ist, kann die Qualität der Wäsche nicht sichergestellt werden.

Gemäß einem weiteren Aspekt bezieht sich die Erfindung auf ein Steuermodul für ein System, wie vorstehend beschrieben. Das Steuermodul kann auch in dem System implementiert sein. Das Steuermodul ist ausgebildet mit:
- Einer Steuerschnittstelle zu einer Menge von mobilen Endgeräten, die jeweils ausgebildet sind, ein Verfahren - wie vorstehend beschrieben - auszuführen;
- wobei das Steuermodul auf der Waschanlage implementiert ist und zum Empfang von erzeugten Rückmeldungssignalen dient, wobei die Rückmeldungssignale die identifizierten beanstandeten Bereiche encodieren und wobei das Steuermodul zur Steuerung und/oder Regelung der Waschanlage und insbesondere der in den Rückmeldungssignalen adressierten Arbeitsaggregate (also auf Basis der erfassten Rückmeldungssignale) zu auf der Waschanlage ausgeführten Fahrzeugwäschen dient.

Vorzugsweise erfolgt die Steuerung und/oder Regelung derjenigen Arbeitsaggregate, die in den Rückmeldungssignalen adressiert sind. Die Steuerung und/oder Regelung kann z.B. eine Ansteuerung mit veränderten Einstellwerten (z.B. veränderte Bürstenrotationsgeschwindigkeit), ein Einleiten einer Überprüfungsmaßnahme und/oder sogar ein Auswechseln des Arbeitsaggregates umfassen.

Gemäß einem weiteren Aspekt bezieht sich die Erfindung auf ein Computerprogramm, wobei das Computerprogramm in eine Speichereinheit einer Recheneinheit ladbar ist und Programmcodeabschnitte enthält, um die Recheneinheit zu veranlassen, das Verfahren zur Steuerung und/oder Regelung einer Waschanlage auszuführen, wenn das Computerprogramm in der Recheneinheit ausgeführt wird.

Die Recheneinheit kann z.B. im Controller der Waschanlage implementiert sein. Die Recheneinheit kann aus einem Speicher einlesen, welche Waschaggregate in der Waschanlage in welcher Form und Version verbaut sind. Die Recheneinheit hat somit Kenntnis über die "Verbausituation" der Waschanlage und kann dies bei der Berechnung der Steuerdaten berücksichtigen.

Der Prozessor kann auch in dem Steuersystem und insbesondere in der lokalen Recheneinheit ausgebildet sein und damit lokal auf der Waschanlage implementiert sein, so dass es sich bei der Prozessorschnittstelle um eine interne Schnittstelle, z.B. Busschnittstelle handelt. Alternativ kann der Prozessor auch auf einem zentralen Server implementiert sein, der über eine Netzwerkschnittstelle (z.B. http/s) mit dem Steuersystem in Datenaustausch steht.

In einer weiteren bevorzugten Ausführungsform der Erfindung ist die Waschanlage eine Portalanlage, eine Waschstraße oder eine Nutzfahrzeugwaschanlage. Bevorzugt wird das System für eine Portalwaschanlage verwendet. Alternativ kann das System auch für eine Waschstraße oder eine Nutzfahrzeugwaschanlage eingesetzt werden. Bei einer Waschstraße können die Waschaggregate (z.B. Dachbürste oder Seitenbürste) oder auch bei Verwendung einer Lineartechnologie die Fahrbewegung der Gantry spezifisch angesteuert werden.

Bei dem Steuermodul handelt es sich um ein elektronisches Bauteil, das z.B. als Steuerung (z.B. SPS) auf der Waschanlage ausgebildet sein kann.

Die Identifikation der beanstandeten Bereiche auf dem Fahrzeug auf Basis der erfassten Aktivierungssignale wird vorzugsweise durch einen Positionsalgorithmus ausgeführt. Der Positionsalgorithmus erfordert eine Koordinatentransformation aus dem virtuellen Bildraum in den Koordinatenraum der Maschine (Waschanlage) und/oder des gewaschenen Fahrzeugs.

Die erzeugte interaktive virtualisierte Darstellung (kurz Darstellung) des Fahrzeugs ist mit dem realen Fahrzeug und insbesondere der Kontur kalibriert. So können Positionen in der Darstellung in Positionen am Fahrzeug umgerechnet werden. Alternativ oder kumulativ können erfassten Positionen in der Darstellung in Features eines implementierten Featuremodells zugeordnet werden.

Das Featuremodell liegt in erzeugter Form vor und speichert zu jeweils einem Eingangsdatensatz, insbesondere aus einem ersten Datensatz der ein Fahrzeugmodell bzw. einen Fahrzeugtyp kennzeichnet und einem zweiten Datensatz, der das Baujahr des Fahrzeugs kennzeichnet, die waschablauf-relevanten fahrzeugmodell/typ-spezifischen Features des Fahrzeugs. Beispielsweise zu einem ersten Eingangsdatensatz, wie z.B. Volvo, V70, Baujahr 2020, ein erstes Feature, z.B. Spiegel mit Positionsdaten, Größenangaben und optional noch Regelparametern, die einen Waschablauf zur Wäsche des Spiegels kennzeichnen, z.B. bei extra breiten Spiegeln, inwiefern die Zustellung des Aktors zur seitlichen Bewegung der Seitenbürste in Richtung zum Fahrzeug verringert werden muss. Das Featuremodell kann in einer (zentralen) Datenbank oder in einer einfachen Form als strukturierte tabellenartige Datenstruktur implementiert sein. Jeder Eintrag in dem Featuremodell kann über einen Identifikator gekennzeichnet werden. Der Eintrag zu einem Feature kann optional noch Anweisungsdaten umfassen, die Anweisungen zur vorteilhaften Ausführung des Waschablaufs kennzeichnen (z.B. Chemiezusatz notwendig, etc.). Das Featuremodell wird einmalig erstellt und kann dann dezentral auf jeder der angeschlossenen Waschanlagen deployed und dort lokal betrieben werden. Das Featuremodell kann aber auch dezentral in dem Steuersystem der jeweiligen Waschanlage implementiert sein und beispielsweise turnusmäßig einem Update unterzogen werden, so dass eine aktualisierte Instanz des Featuremodells auf z.B. den Controller und/oder eine SD-Karte der Waschanlage aufgespielt wird.

Das Featuremodell enthält somit Konturabschnitte und Positionsangaben und/oder Größenangaben von Anbauteilen, wie z.B. Rädern, Spiegeln, Griffen, Spoilern, Wischern, Nummernschildern (speziell hinten), Stoßstangen, Ersatzrädern und/oder Trittbrettern. Des Weiteren sind in dem Featuremodell nur die Übergänge von einem ersten Konturabschnitt (z.B. Motorhaube) zu einem zweiten Konturabschnitt (z.B. Windschutzscheibe) enthalten. Alle dazwischen liegenden Positionsangaben eines zugrundeliegenden 2D/3D Modells werden gelöscht. Aus den Konturdaten des 2D/3DModells können insbesondere Abschnitte gelöscht werden, z.B. Konturdaten, die den Anfang des Abschnittes "Motorhaube" kennzeichnen, und Konturdaten, die dessen Ende kennzeichnen, werden beibehalten und aus dem 2D/3D-Modell in das Featuremodell übernommen, während alle dazwischen liegenden Konturdaten (die den Bereich der Motorhaube repräsentieren) gelöscht werden. Aus dem zugrundeliegenden 2D/3D Modell des Fahrzeugtyps werden somit nur relevante Positionsdaten für jedes Feature extrahiert. Farbe oder Innenraumdaten sind in dem Featuremodell beispielsweise nicht enthalten. Auch alle Daten, die keinen Einfluss auf die Wäsche und/oder den Waschablauf haben, werden herausgefiltert. Das Featuremodell ist somit im Vergleich zu dem 2D/3D-Modell wesentlich weniger speicherintensiv und umfasst nur wenige Kilobyte. Grundsätzlich kann der Grad der Kompression (2D/3D-Modell -> Featuremodell) anhand der Genauigkeit und/oder der Maschinentoleranzen der Waschanlage bestimmt werden. Das Featuremodell muss nur so genau sein, wie die Maschine bzw. die Waschanlage mit ihren Aggregaten arbeiten kann. So können z.B. Abweichungen von einer idealisierten Ebene um +/- 2 cm ignoriert werden.

Das Featuremodell kann für ausgewählte Fahrzeuge auch fahrzeugindividuell sein, wenn alle Features des Fahrzeuges in dem Featuremodell erfasst worden sind und das jeweilige Fahrzeug z.B. über das Kennzeichen eineindeutig identifiziert werden kann. Das Featuremodell ist dazu zentral in einem Speicher, z.B. in einer Online-Datenbank für Featuremodelle, verfügbar. Relevante Positions- und/oder Größenangaben und/oder geometrische Angaben zu jeweils einem Feature werden aus einem 2D- oder 3D-Modell des Fahrzeugtyps extrahiert. Ein Feature bezieht sich auf ein Fahrzeug und dessen Fahrzeuggeometrie und/oder Fahrzeugkontur. In einer bevorzugten Ausführungsform kann sich ein Feature insbesondere auf ein Serienfahrzeug beziehen. Ein Feature kann z.B. der Spiegel sein. Mit anderen Worten hat z.B. ein Volvo vom Typ V70 aus dem Baujahr 2020 immer ein Feature "Spiegel" an Position xyz in Größe abc. Ein Fahrzeug hat üblicherweise mehrere solcher Features.

Der Waschablauf erfordert den Einsatz von unterschiedlichen Waschaggregaten der Waschanlage zu unterschiedlichen Zeitpunkten. Der Waschablauf bzw. die Waschablaufdaten kennzeichnen den Zeitpunkt, die Dauer und/oder die Art des Betriebs eines Waschaggregates, wie z.B. den Zeitpunkt, die Dauer einer Aktivierung der Seitenbürste und wann eine Bürstenrotationsrichtungsumkehr zu erfolgen hat. Der Waschablauf bzw. die Waschablaufdaten sind abhängig von der Konfiguration der jeweiligen Waschanlage, insbesondere z.B. der installierten Waschaggregate und/oder der "Verbausituation".

Ein Feature (z.B. Spiegel oder Spoilerkante) ist ein Merkmal des Fahrzeugs, das für die Qualitätsbeurteilung der Fahrzeugwäsche relevant ist. Ein Feature kann ein Bereich am Fahrzeug und/oder an dessen Außenkontur sein, wie z.B. ein Anbauteil. Das Feature kann aber auch auf geometrisch benachbarte Bereiche ausgeweitet werden, wie z.B. bei dem Feature "Radkasten". Der Radkasten lenkt die Waschbürste (Waschaggregat) ab, was zu einer schlechten Waschqualität im Bereich hinter dem Radkasten führt. Das Feature "Radkasten" wird deshalb bei der Behandlung auf den hinten benachbarten Bereich ausgedehnt. Zumindest ein Feature des Featuremodells kann in einer bevorzugten Ausführungsform der Erfindung zum Erzeugen der interaktiven virtualisierten Darstellung des Fahrzeugs verwendet werden. Kumulativ oder alternativ kann zumindest ein Feature zum Erzeugen der Rückmeldungssignale verwendet werden.

Aus dem Feature können waschablauf-relevante Parameter berechnet werden. Ein Feature kann z.B. eine geometrische Eigenheit des Fahrzeugs sein, dessen geometrische Angaben (z.B. Länge, Höhe, Breite, Position) in stark vereinfachter Form mittels einer Vektordarstellung oder gar als Zahl dargestellt werden können. Ein Feature kann unterschiedliche Eigenschaften haben, wie z.B. Länge, Höhe, Breite, Position. Die Eigenschaften sind klassifizierend und führen zur Auswahl eines bestimmten Waschablaufs (Behandlungsroutine der Waschanlage). Ein Feature ist vorzugsweise fahrzeugmodell- bzw. fahrzeugtyp-spezifisch. Es kann aber muss nicht fahrzeug-individuell sein. Tuningteile sind zum Beispiel fahrzeug-individuell. Bei eindeutiger Identifikation des jeweiligen Fahrzeugs, beispielsweise durch eine Nummernschilderkennung, kann ein perfekt angepasster Waschablauf auch für die Tuningteile bestimmt werden.

Die Identifikation der beanstandeten Bereiche auf dem Fahrzeug erfolgt grundsätzlich auf Basis der zuvor erfassten Aktivierungssignale.

Es werden eine Menge von Signalen verarbeitet: Bewertungssignale, insbesondere negative oder positive Bewertungssignale, Aktivierungssignale und Rückmeldungssignale, die im Folgenden definiert werden.

Das Bewertungssignal kann ein binäres Signal sein, um eine positive oder negative Bewertung zu repräsentieren (gut oder schlecht). In einer komplexeren Ausführungsform der Erfindung kann das Bewertungssignal auch kategorial sein und mehrere Bewertungsklassen repräsentieren, die wiederum anhand von Klassifikationsregeln auf zwei binäre Klassen (gut oder schlecht) "gemapped" werden. Das Bewertungssignal kann ein digitales Signal sein.

Das Aktivierungssignal wird auf der HMI des mobilen Endgerätes erfasst. Es kann ein singuläres Aktivierungssignal erfasst werden, um einen einzelnen Bereich der Wäsche zu kennzeichnen, auf den sich die Bewertung beziehen soll; es können aber sequentiell auch mehrere Aktivierungssignale erfasst werden, um mehrere Bereiche des Fahrzeugs zu bewerten. Dies erfolgt vorzugsweise iterativ, so dass zunächst ein erster Bereich bewertet wird und dann ein zweiter Bereich etc. Die Aktivierungssignale werden insbesondere in der erzeugten und ausgegebenen interaktiven virtualisierten Darstellung erfasst. Dies hat zur Folge, dass die Aktivierungssignale implizit eine Positionsangabe in der interaktiven virtualisierten Darstellung beinhalten. Bei den Aktivierungssignalen kann es sich um Mausclicks und/oder Tasteneingaben handeln. Es ist auch möglich, Spracheingaben zu erfassen, und diese durch einen Audioalgorithmus in Positionsangaben auf der erzeugten interaktiven virtualisierten Darstellung umzurechnen, die dann durch ein ausgegebenes Bestätigungsfeld bestätigt oder verworfen werden können. Die Aktivierungssignale sind somit elektronische Signale.

Bei den Rückmeldungssignalen handelt es sich um digitale Signale, die die identifizierten beanstandeten oder positiv bewerteten Bereiche der ausgeführten Fahrzeugwäsche im Koordinatensystem der Waschanlage und/oder des Fahrzeugs kennzeichnen. Die Rückmeldungssignale werden über die Steuerschnittstelle an das Steuermodul übertragen. Nach Empfang der Rückmeldungssignale auf dem Steuermodul kann das Steuermodul auswerten, welche Fahrzeugbereiche negativ und möglicherweise welche anderen Fahrzeugbereiche positiv bewertet worden sind. Für die negativ bewerteten Fahrzeugbereiche wird ein weiterer Identifikationsalgorithmus dahingehend ausgeführt, um die beteiligten Arbeitsaggregate zu bestimmen, die bei der Wäsche des identifizierten und beanstandeten Fahrzeugbereichs involviert waren. Anschließend können die beteiligten Arbeitsaggregate einer Überprüfungsprozedur unterzogen werden.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- FIG. 1: ist eine schematische Übersichtsdarstellung eines Steuersystems zur Steuerung und/oder Regelung einer Waschanlage in Antwort auf erfassten Rückmeldungssignale gemäß einer bevorzugten Ausführungsform der Erfindung;
- FIG. 2: ist ein Ablaufdiagramm für ein Verfahren zur Bewertung einer Fahrzeugwäsche gemäß einer alternativen Ausführungsform der Erfindung;
- FIG. 3: zeigt in einer schematischen Darstellung einer erzeugten interaktiven virtualisierten Darstellung des Fahrzeugs an einem Beispiel;
- FIG. 4: ist ein Interaktionsdiagramm zwischen dem mobilen Endgerät und einem Steuermodul und optional einem Server;
- FIG. 5: zeigt schematisch ein Blockdiagramm von elektronischen Bauteilen, insbesondere Mikroprozessorbauteilen und digitalen Strukturen zur Erzeugung der interaktiven virtualisierten Darstellung des Fahrzeugs; und
- FIG. 6: zeigt einen Identifikationsalgorithmus zur Identifikation von betroffenen Arbeitsaggregaten.

### Beschreibung von Ausführungsbeispielen anhand der Figuren

Der vorliegenden Erfindung liegt die Problemstellung zugrunde, dass bei bisherigen Fahrzeugwaschanlagen bzw. Fahrzeugwaschsystemen aus dem Stand der Technik eine Bewertung der ausgeführten Fahrzeugwäsche nur unzureichend oder teilweise sogar gar nicht bei der weiteren Steuerung und/oder Regelung der Waschanlage, der Überprüfung von Arbeitsaggregaten und zur Optimierung der Prozessabläufe berücksichtigt werden konnte. Selbst wenn dem Fahrzeughalter bzw. Kunden (der Fahrzeugwaschanlage) die Möglichkeit bereitgestellt wird, die ausgeführte Wäsche zu bewerten, so gab es bisher keine Mittel und Möglichkeiten, diese Bewertung auf systematische Weise zur weiteren Verbesserung der Waschabläufe der Waschanlage zu verwenden.

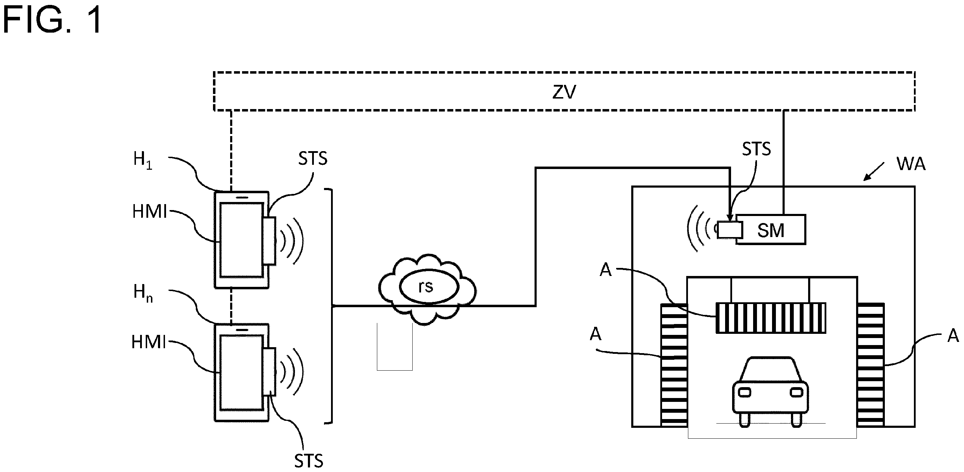

Um dies zu ermöglichen, schlägt die vorliegende Erfindung ein System vor, das in Figur 1 schematisch dargestellt ist. Das System umfasst eine Vielzahl von mobilen Endgeräten H, die zum Beispiel als Smartphones, Tablets oder anderen mobilen Geräten ausgebildet sein können. Auf den mobilen Endgeräten ist jeweils eine Applikation installiert, die dazu bestimmt ist, eine Steuerschnittstelle STS und eine Mensch-Maschine-Schnittstelle HMI auszubilden. Die Steuerschnittstelle dient zur Kommunikation mit der Waschanlage WA und insbesondere mit einem Steuermodul SM. In dem in Figur 1 dargestellten Beispiel ist eine Portalwaschanlage WA dargestellt, die zwei Seitenbürsten und eine Dachbürste als Arbeitsaggregate A umfasst. Für den Fachmann ist es offensichtlich, dass die Waschanlage neben den genannten Arbeitsaggregaten A noch weitere Waschmittel und Tools umfasst, wie zum Beispiel Felgenbürsten, eine Trocknungsanlage, Sprühdüsen etc. (in Figur 1 nicht explizit dargestellt). Die Steuerschnittstelle STS ist vorzugsweise eine drahtlose Schnittstelle (zum Beispiel über ein Funknetzwerk oder über das Internet, zum Beispiel mittels http/s-Protokoll) und verbindet das mobile Endgerät H mit dem Steuermodul SM, das entweder direkt auf der Waschanlage WA implementiert sein kann (in Figur 1 dargestellt) oder mit ihr in Datenaustausch steht. Wie in Fig. 1 schematisch dargestellt umfasst die Steuerschnittstelle STS einen Client-Anteil (auf dem mobilen Endgerät H) und einen Serveranteil (auf dem Steuermodul SM). Die Mensch-Maschine-Schnittstelle HMI dient zur Ein - und/oder Ausgabe von Daten. Die Steuerschnittstelle STS dient zur Übermittlung von Daten zwischen dem mobilen Endgerät H und dem Steuermodul SM und insbesondere zur Transmission von Rückmeldungssignalen rs von dem mobilen Endgerät H an das Steuermodul SM.

In einer weiteren bevorzugten Ausführungsform kann - optional - eine zentrale Verarbeitungseinheit ZV vorgesehen sein, die zum Beispiel als zentraler Cloud-basierte Server für eine Menge von Waschanlagen WA und/oder für eine Menge von mobilen Endgeräten H betrieben werden kann. Wie in Figur 1 dargestellt, interagiert die zentrale Verarbeitungseinheit ZV mit jeweils einem Steuermodul SM aus der Menge von Steuermodul SM. Optional (und deshalb in Figur nur gepunktet dargestellt) kann auch eine Datenverbindung zwischen dem jeweiligen mobilen Endgerät H und der zentralen Verarbeitungseinheit ZV bereitgestellt werden. Auch wenn die Ausbildung der zentralen Verarbeitungseinheit ZV nur fakultativ und deshalb in Figur 1 in gepunkteter Linie dargestellt ist, so ist sie doch bevorzugt. Die zentrale Verarbeitungseinheit ZV dient zur Waschanlagen-übergreifenden Berechnung von Steuerdaten (für die Steuermodule SM) in Antwort auf die erfassten jeweiligen Rückmeldungssignale rs. So ist es beispielsweise möglich, Rückmeldungssignale für unterschiedliche Fahrzeuge und/oder von unterschiedlichen mobilen Endgeräten H zu aggregieren bzw. zu akkumulieren, um daraus Mittelwerte oder Benchmarkwerte zu berechnen. Die derart berechneten Benchmarkwerte können dann im Wege eines Nachrichtenaustausches an die jeweiligen Steuermodule als Referenzwert zurückgemeldet werden. Zum Beispiel kann somit einer bestimmten Waschanlage WA bzw. dessen Steuermodul SM die im Folgenden schematisch dargestellte Information zur lokalen Prozessierung übermittelt werden:
Für die ausgeführte Fahrzeugwäsche xyz wurden die Rückmeldungssignale abc ermittelt. Die Arbeitsaggregate A1 und A5 sind von den Rückmeldungssignale abc betroffen (Ergebnis eines Identifikationsalgorithmus). Ein auf dem Steuermodul SM implementierter Verbesserungsalgorithmus gibt als Ergebnis veränderte Einstellwerte für die Arbeitsaggregate A1 und A5 aus, sodass die Arbeitsaggregate A1 und A5 bei zukünftigen Wäschen keine beanstandeten Bereiche mehr hervorrufen. Dieses Ergebnis kann mit den Benchmarkwerten von anderen Waschanlagen verglichen werden. Somit kann zum Beispiel die Information bereitgestellt werden Auch auf anderen Waschanlagen wurden für die Arbeitsaggregate A1 und A5 veränderte Einstellwerte angewendet'. Die Benchmarkwerte können damit zur Verifikation des lokal implementierten Verbesserungsalgorithmus dienen.

Der auf dem Steuermodul SM implementierte Identifikationsalgorithmus dient dazu, aus den empfangenen Rückmeldungssignalen rs zumindest ein jeweils betroffenes Arbeitsaggregat A (es können auch mehrere Arbeitsaggregate A betroffen sein) zu identifizieren, das bei der Reinigung der Fahrzeugbereiche beteiligt war, auf das sich die Rückmeldungssignale rs beziehen.

Das Steuermodul SM umfasst einen Speicher oder steht mit einem Speicher in Datenaustausch, auf dem die Rückmeldungssignale rs und/oder die mittels des Identifikationsalgorithmus betroffenen Arbeitsaggregate A gespeichert werden. Damit wird es möglich, dass nach Ablauf von bestimmten Zeitintervallen oder Ereignis-basiert überprüft wird, ob von unterschiedlichen mobilen Endgeräten zu unterschiedlichen ausgeführten Wäschen solche Rückmeldungssignale rs empfangen werden, die dieselben Arbeitsaggregate A betreffen. In diesem Fall kann ein Schwellenwert (z.B. > 2) definiert werden, bei dessen Überschreiten automatisch eine Instandhaltungsprozedur und/oder eine Wartungsmaßnahme des oder der jeweiligen Arbeitsaggregate(s) A ausgeführt wird.

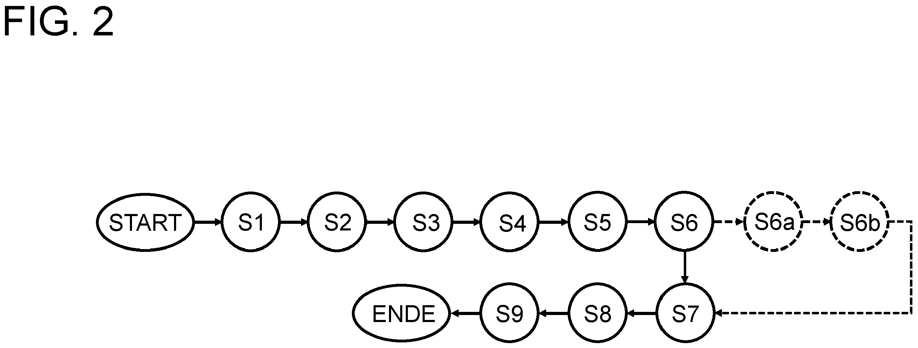

**Figur 2** zeigt ein Ablaufdiagramm eines Verfahrens zur Bewertung einer ausgeführten Fahrzeugwäsche mittels einer Applikation, die auf einem mobilen Endgerät H implementiert ist. Die Applikation ist auf dem mobilen Endgerät H implementiert und dient in Schritt S1 dazu, die Mensch-Maschine-Schnittstelle HMI und die Steuerschnittstelle STS (zu dem Steuermodul SM) zu erzeugen. Weiter ist die Applikation ausgerichtet, Felder, insbesondere Eingabefelder zur Eingabe von Bewertungssignalen, auf der Mensch-Maschine-Schnittstelle HMI auszugeben. Die Bewertungssignale dienen dazu, eine Bewertung der ausgeführten Wäsche abzugeben. In einer einfachen Ausführungsform können beispielsweise zwei Felder ausgegeben werden: ein Feld für positive Bewertungen (zum Beispiel mit einer stilisierten Darstellung eines nach oben gerichteten Daumens) und ein Feld für negative Bewertungen (zum Beispiel mit einer stilisierten Darstellung eines nach unten gerichteten Daumens). Selbstverständlich können auch andere Feldinhalte gewählt werden (zum Beispiel ein Pluszeichen oder ein Minuszeichen). Die Feldinhalte können in einer Konfigurationsphase ausgewählt werden. Die Felder sind interaktiv und können zum Beispiel durch Gestensteuerung bzw. Gesteninteraktion bedient werden. Im Schritt S3 werden die Signale auf den ausgegebenen Feldern als Bewertungssignale erfasst. In einer einfachen Ausführungsform wird nur ein Bewertungssignal in binärer Form erfasst (plus/Wäsche zufriedenstellend/keine Beanstandungen oder minus/Wäsche defizitär/mit Beanstandungen). In anderen Ausführungsformen kann das Bewertungssignal als kategoriale Variable erfasst werden und zum Beispiel die Kategorien "sehr gut", "gut", "mittel", "ausreichend", "schlecht" umfassen. Alternativ kann das Bewertungssignal auch als numerische Variable erfasst werden im Sinne einer Notenskala. In einer bevorzugten Ausführungsform kann konfiguriert werden, welche der Kategorien auf eine positive Bewertung und welche der Kategorien auf eine negative Bewertung abgebildet werden sollen. Die Applikation ist ausgebildet, zu unterscheiden, welcher Art das erfasste Bewertungssignal ist und insbesondere, ob es sich um ein positives oder um ein negatives Bewertungssignal handelt. Falls es sich um ein negatives Bewertungssignal handelt, wird in Schritt S4 eine erzeugte interaktive virtualisierte Darstellung V des jeweiligen Fahrzeugs eingelesen und auf der Mensch-Maschine-Schnittstelle HMI ausgegeben bzw. dargestellt.

In einer ersten Ausführungsform wird die interaktive virtualisierte Darstellung V lokal und direkt auf dem mobilen Endgerät H erzeugt. Dies kann beispielsweise mittels der dort installierten Applikation ausgeführt werden. In einer zweiten Ausführungsform wird die interaktive virtualisierte Darstellung V nicht lokal auf dem mobilen Endgerät H erzeugt, sondern auf einer externen, separaten Instanz, zum Beispiel auf einem Server SV. Der Server SV überträgt dann (nach Berechnung der virtualisierten Darstellung des Fahrzeugs oder des Fahrzeugtyps) die Darstellungsdaten zum Rendern der interaktiven virtualisierten Darstellung V an das mobile Endgerät H, um dieses in die Lage zu versetzen, die interaktive virtualisierte Darstellung V auf der Mensch-Maschine-Schnittstelle HMI auszugeben.

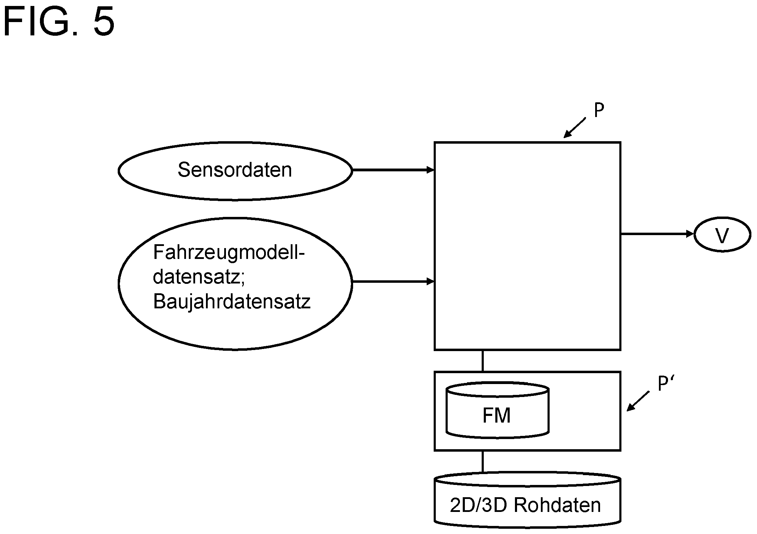

Die interaktive virtualisierte Darstellung V des Fahrzeugs wird in Abhängigkeit von dem Fahrzeugtyp/Fahrzeugmodell (zum Beispiel Tesla Model Y oder BMWi4) oder sogar in Abhängigkeit von dem jeweiligen Fahrzeug (also Fahrzeug-individuell) berechnet oder erzeugt. Um dies zu ermöglichen, kann in einer weiteren bevorzugten Ausführungsform auf eine Featuremodell zugegriffen werden (dies wird weiter unten im Zusammenhang mit Figur 5 näher erläutert).

Die Applikation ist weiter dazu eingerichtet, in Schritt S5 eine Aufforderung AF auf der Mensch-Maschine-Schnittstelle HMI auszugeben. Die Aufforderung AF kann in optischer und/oder akustischer Form ausgegeben werden, um dem Anwender zu signalisieren, dass er diejenigen Bereiche aktivieren sollen, die er beanstanden möchte. Mit anderen Worten, soll er in der interaktiven virtualisierten Darstellung V die Fahrzeugbereiche kennzeichnen, auf denen ein unzureichendes Waschergebnis zu verzeichnen ist. Daraufhin werden in Schritt S6 die in Antwort auf die Aufforderung AF aktivierten Bereiche in der ausgegebenen interaktiven virtualisierten Darstellung des Fahrzeugs V als Aktivierungssignale as erfasst. Die Aktivierungssignale as sind zunächst auf das Koordinatensystem der interaktiven virtualisierten Darstellung V bezogen. Die Aktivierungssignale as können deshalb nicht direkt zur Steuerung und/oder Regelung der Arbeitsaggregate an der Waschanlage WA und damit im Koordinatensystem der Waschanlage WA verwendet werden. Deshalb ist ein Umrechnungsalgorithmus vorgesehen, der - vorzugsweise durch Koordinatentransformation - in Antwort auf die erfassten Aktivierungssignale as Positionsangaben in Bezug auf das Fahrzeugkoordinatensystem bzw. auf das Koordinatensystem der Waschanlage WA berechnet. Die berechneten Positionsangaben repräsentieren die identifizierten beanstandeten Bereiche auf dem Fahrzeug.

Dieser Schritt S7 zur Identifikation der beanstandeten Bereiche (im Koordinatensystem des Fahrzeugs und/oder der Waschanlage WA) kann in einer ersten Ausführungsform lokal und direkt auf dem mobilen Endgerät H ausgeführt werden oder er kann indirekt auf einem separaten Gerät, zum Beispiel auf einem Server SV ausgeführt werden. Im letzteren Fall werden nur die Identifikationsdaten, die die beanstandeten Bereiche auf dem Fahrzeug repräsentieren, auf dem mobilen Endgerät H von dem Server SV eingelesen und anschließend weiterverarbeitet.

In Schritt S8 werden Rückmeldungssignale rs erzeugt. Die Rückmeldungssignale rs werden in Schritt S9 an das Steuermodul SM über die Steuerschnittstelle STS weitergeleitet. Die Rückmeldungssignale rs encodieren die identifizierten beanstandeten Fahrzeugbereiche. Nach Empfang der Rückmeldungssignale rs auf dem Steuermodul SM kann Letzteres geeignete Verbesserungsmaßnahmen initiieren. Die Rückmeldungssignale rs können beispielsweise zumindest ein Arbeitsaggregat A indizieren, das an der Reinigung des beanstandeten Bereichs beteiligt war. Insofern kann ein Rückschluss auf das jeweilige Arbeitsaggregat A ausgeführt werden, um dieses beispielsweise eine Überprüfungsmaßnahme zu unterziehen. Deuten beispielsweise die Rückmeldungssignale rs darauf hin, dass sich die beanstandeten Bereiche auf die Felgen beziehen, so kann eine automatische Überprüfungsprozedur ausgewählter Arbeitsaggregate, hier: der Felgenwäscher, angestoßen werden.

In einer bevorzugten Ausführungsform der Erfindung können optional nach dem Erfassen der Aktivierungssignale as in Schritt S6 weitere Verfahrensschritte ausgeführt werden. Insbesondere ist es möglich, in einem Schritt S6a ein adaptives Dialogmenü zu erzeugen. Dies kann in Antwort auf das erfasste Bewertungssignal und/oder in Antwort auf das erfasste Aktivierungssignal as in der interaktiven virtualisierten Darstellung V ausgeführt werden. Das adaptive Dialogmenü wird in einem Schritt S6b auf der Mensch-Maschine-Schnittstelle HMI bereitgestellt oder ausgegeben und dient zur Spezifikation der Bewertungen. Beispielsweise kann das adaptiven Dialogmenü bei einer negativen Bewertung zusätzlich einen Grad der Unzufriedenheit (Info konfigurierbaren Stufen bzw. Kategorien) abfragen. Kumulativ oder alternativ ist es möglich, abzufragen, ob in bestimmten Teilbereichen in dem beanstandeten Bereich besonders hohe Qualitätseinbußen zu verzeichnen sind, während in anderen Teilbereichen geringere oder gar keine Qualitätseinbußen zu verzeichnen sind. Kumulativ oder alternativ kann abgefragt werden, ob die beanstandeten Bereiche des Fahrzeugs bereits häufiger Gegenstand von negativen Bewertungen waren (falls ja, kann daraus geschlossen werden, dass es sich hier um einen kritischen Bereich handelt und somit möglicherweise um ein kritisches Feature. Falls noch kein Feature für den Bereich existiert, kann die Erzeugung eines Features in dem Featuremodell veranlasst werden).

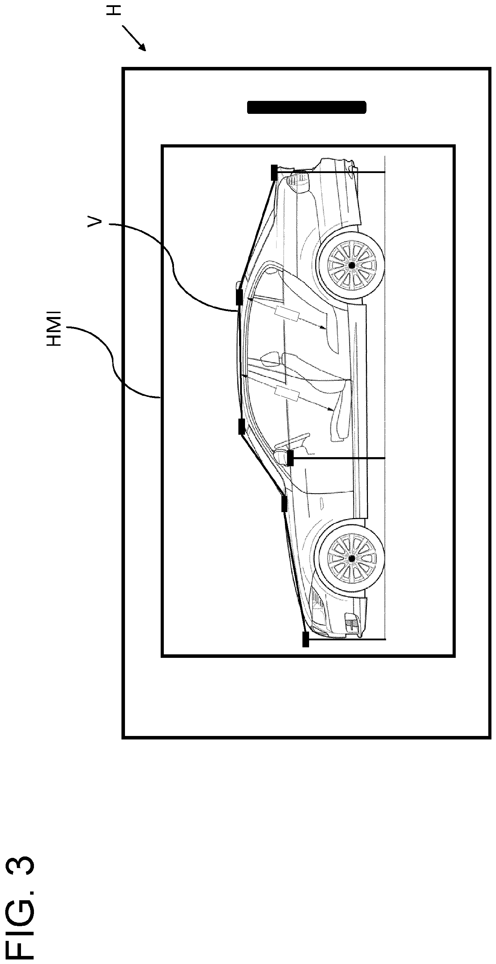

**Figur 3** zeigt in einer schematischen Darstellung ein mobiles Endgerät H mit einer Mensch-Maschine-Schnittstelle HMI, auf der eine fahrzeugspezifische interaktive virtualisierte Darstellung V bereitgestellt wird. Wie der Name sagt, ist die Darstellung interaktiv, sodass Abschnitte, Ausschnitte bzw. bestimmte Fahrzeugbereiche für eine anschließende Bewertung ausgewählt werden können. In einer Konfigurationsphase kann eingestellt werden, ob grundsätzlich nur beanstandete Bereiche erfasst werden oder, ob es möglich sein soll auch Bereiche positiv zu bewerten.

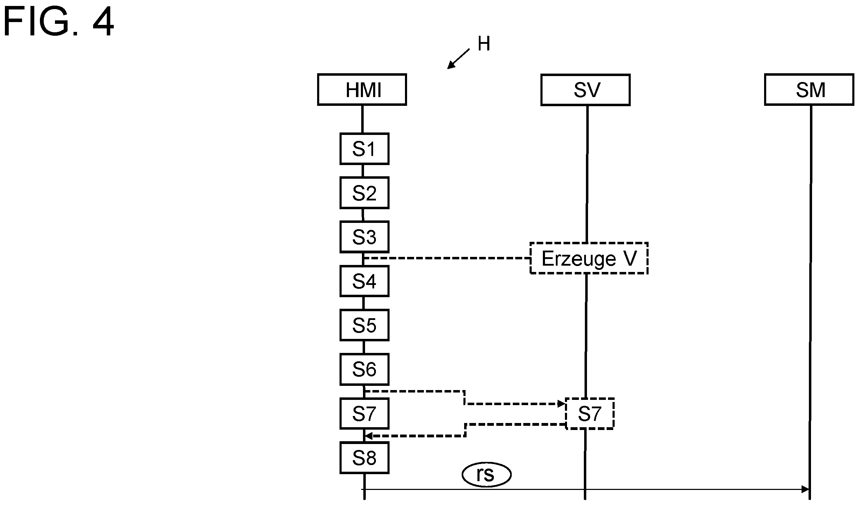

**Figur 4** zeigt in einem Interaktionsdiagramm den Datenaustausch zwischen dem mobilen Endgerät H und dem Steuermodul SM und optional einen Server SV gemäß einer vorteilhaften Ausführungsform der Erfindung. Wie in Figur 4 dargestellt, können in einer ersten Ausführungsform alle vorstehend erwähnten Verfahrensschritte S1 bis S9 lokal auf dem mobilen Endgerät H ausgeführt werden. Zur Ausführung dieser Schritte wird vorzugsweise die Applikation auf dem mobilen Endgerät H installiert und ausgeführt. Nachdem die Rückmeldungssignale rs auf dem mobilen Endgerät H in Schritt S8 erzeugt worden sind, können sie in Schritt S9 an das Steuermodul SM übertragen werden, um dort weiterverarbeitet zu werden. Insbesondere können dort (also auf Seiten der Waschanlage WA) Überprüfungsmaßnahmen und Korrekturmaßnahmen in Bezug auf die beteiligten Arbeitsaggregate A initiiert werden. "Beteiligte Arbeitsaggregate" meint in diesem Zusammenhang eine Auswahl derjenigen Arbeitsaggregate A, die bei der Wäsche der beanstandeten Bereiche involviert waren. Die Auswahl dieser beteiligten Arbeitsaggregate A kann aus den Rückmeldungssignalen rs mittels des Identifikationsalgorithmus berechnet werden.

Wie in Figur 4 durch die gepunktet gezeichneten Pfeile und Kästen dargestellt, kann das Erzeugen der interaktiven virtualisierten Darstellung des Fahrzeugs V alternativ oder zumindest teilweise auf dem Server SV ausgeführt werden. Danach können die Darstellungsdaten (gepunktete Linie vom Server V an das mobile Endgerät H vor dem Schritt S4) an das mobile Endgerät H zurück übertragen werden, um die interaktive virtualisierte Darstellung V des jeweiligen Fahrzeugs oder des jeweiligen Fahrzeugtyps zu rendern. Weiterhin kam der Schritt S7 zur Identifikation der beanstandeten Fahrzeugbereiche im Koordinatensystem des Fahrzeugs bzw. der Waschanlage WA auch auf dem Server SV ausgeführt werden. Dies ist in Figur 4 ebenfalls gepunktet dargestellt. Somit können die rechenintensiven Verfahrensschritte auch auf ein Gerät mit größeren Ressourcen (Prozessorleistung, Speicherkapazität etc.) ausgelagert werden und müssen nicht lokal über die Applikation auf dem mobilen Endgerät H abgewickelt werden.

**Figur 5** ist eine schematische Blockdiagrammdarstellung einer Recheneinheit oder eines Prozessors P, die/der zum Erzeugen der interaktiven virtualisierten Darstellung des Fahrzeugs V ausgebildet ist. Der Prozessor P kann lokal auf dem Steuermodul SM implementiert sein oder mit diesem in Datenaustausch stehen und beispielsweise auf dem Server SV oder auf der zentralen Verarbeitungseinheit ZV implementiert sein. Der Prozessor P weist eine Eingangsschnittstelle auf, um Sensordaten von Sensoren (zum Beispiel optische Daten von einer Kamera oder von Lichtschranken oder von LIDAR Sensoren) zu empfangen, die Eigenschaften des Fahrzeugs erfassen und vorzugsweise an der Waschanlage WA ausgebildet sind. Die Eingangsschnittstelle ist weiterhin dazu ausgebildet, einen Fahrzeugmodelldatensatz und/oder einen Baujahrdatensatz zu empfangen (diese Datensätze können beispielsweise durch die auf dem mobilen Endgerät H implementierte Applikation abgefragt werden und über die Eingangsschnittstellen dem Prozessor P zugeführt werden). Der Prozessor P ist weiterhin dazu ausgebildet auf einen weiteren Prozessor P' zuzugreifen, in dem ein erzeugtes Featuremodell FM gespeichert ist. Das Featuremodell FM ordnet dem Tupel aus Fahrzeugmodelldatensatz und Baujahrdatensatz eine Menge von Features zu. Das Featuremodell wird für jedes Fahrzeug spezifisch erzeugt, insbesondere aus zweidimensionalen oder dreidimensionalen Konturrohdaten. Der Prozessor P greift mit den empfangenen Sensordaten und/oder mit den empfangenen Fahrzeugmodelldatensatz und Baujahrdatensatz auf das Featuremodell FM zu, um eine virtualisierte Darstellung V des jeweiligen Fahrzeugmodells zu rendern. Die erzeugte virtualisierte Darstellung V ist insofern interaktiv, als dass Bereiche in der Darstellung wahlweise aktiviert werden können. Dies kann zum Beispiel durch Mausklicks oder durch geeignete Eingabesignale erfolgen.

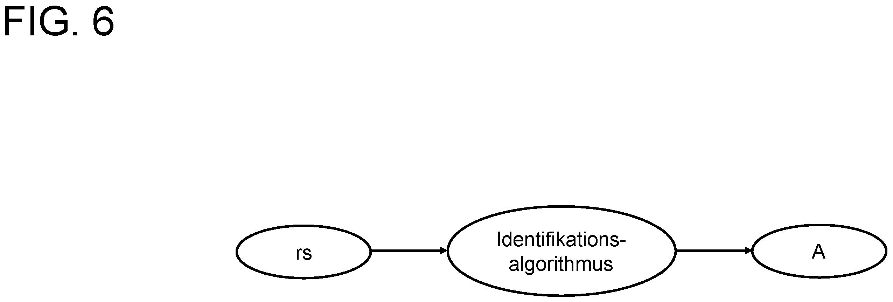

**Figur 6** beschreibt den Identifikationsalgorithmus, der z.B. auf dem Steuermodul SM oder auf dem Server SV oder auf der zentralen Verarbeitungseinheit ZV implementiert sein kann und dazu dient, aus den empfangenen Rückmeldungssignalen rs diejenigen Arbeitsaggregate A zu ermitteln, die bei der ausgeführten Wäsche in dem oder den beanstandeten Bereichen beteiligt waren. In den Rückmeldungssignalen rs ist zumindest ein beanstandeter Bereich angesprochen, der lokal auf der Applikation auf dem mobilen Endgerät H in der interaktiven virtualisierten Darstellung V als defizitär und zu beanstanden aktiviert worden ist.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Die Abfolge der Verfahrensschritte kann, soweit technisch möglich, variiert werden.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für die erwähnten Architekturbeispiele (z.B. als lokales oder als verteiltes System) angewendet werden kann, sondern auch für andere Systemarchitekturen. So können die Bauteile des Systems, wie z.B. des Steuermoduls SM, auf einer Einheit/einem Gerät oder auf mehreren physikalisch-technischen Produkten verteilt realisiert sein. Weiterhin kann die Erfindung nicht nur für Portalwaschanlage, sondern auch für andere Waschanlagetypen (Waschstraße oder Nutzfahrzeugwaschanlagen) angewendet werden.

## Patentansprüche

1. Computer-implementiertes Verfahren zur Bewertung einer Fahrzeugwäsche, die auf einer Waschanlage ausgeführt wurde, umfassend folgende Verfahrensschritte, die zumindest teilweise auf einem mobilen Endgerät (H) ausgeführt werden:
- Bereitstellen (S1) einer Mensch-Maschine-Schnittstelle (HMI) und einer Steuerschnittstelle (STS) zu einem Steuermodul (SM) der Waschanlage (WA);
- Ausgeben (S2) von Feldern auf der Mensch-Maschine-Schnittstelle (HMI), die dazu dienen, zumindest ein Bewertungssignal zu erfassen (S3), um die Wäsche zu bewerten;
- Bei Erfassen von einem negativen Bewertungssignal: Einlesen (S4) einer erzeugten interaktiven virtualisierten Darstellung des Fahrzeugs ee und Ausgabe auf der Mensch-Maschine-Schnittstelle (HMI) des mobilen Endgerätes (H);
- Ausgeben (S5) einer Aufforderung (AF) auf der Mensch-Maschine-Schnittstelle (HMI), beanstandete Bereiche in der interaktiven virtualisierten Darstellung (V) mittels Aktivierungssignalen (as) zu aktivieren, wobei die beanstandeten Bereiche hinsichtlich einer Waschqualität beanstandet werden;
- Erfassen (S6) von Aktivierungssignalen (as) in der interaktiven virtualisierten Darstellung (V);
- Einlesen einer Identifikation (S7) der beanstandeten Bereiche auf dem Fahrzeug auf Basis der erfassten Aktivierungssignale (as);
- Erzeugen (S8) von Rückmeldungssignalen (rs) zur Weiterleitung (S9) an das Steuermodul (SM) über die Steuerschnittstelle (STS), wobei die Rückmeldungssignale (rs) die identifizierten beanstandeten Bereiche encodieren.

2. Verfahren nach Anspruch 1, bei dem die erzeugte interaktive virtualisierte Darstellung des Fahrzeugs fahrzeugtyp-spezifisch oder fahrzeug-spezifisch ist.

3. Verfahren nach einem der vorangehenden Ansprüche, bei dem das Erzeugen (S4) der
interaktiven virtualisierten Darstellung des Fahrzeugs ee in Antwort auf Sensordaten und/oder unter Zugriff auf ein gespeichertes Featuremodell (FM) erfolgt, das die Kontur des betreffenden Fahrzeugs oder Fahrzeugtyps codiert, insbesondere in Antwort auf einen erfassten Fahrzeugmodelldatensatz und einen erfassten Baujahrdatensatz.

4. Verfahren nach einem der vorangehenden Ansprüche, bei dem die Rückmeldungssignale (rs) Statussignale umfassen, die die ausgeführte Wäsche spezifizieren.

5. Verfahren nach einem der vorangehenden Ansprüche, bei dem die Rückmeldungssignale (rs) Metainformationen zur ausgeführten Wäsche, zum Fahrzeug, zur Waschanlage (WA), mit der die Wäsche ausgeführt worden ist und/oder zu dem Bewertungssignal umfassen.

6. Verfahren nach einem der vorangehenden Ansprüche, bei dem ein adaptives Dialogmenü auf der Mensch-Maschine-Schnittstelle (HMI) zur Spezifikation der Bewertungen bereitgestellt wird (S6b), das adaptiv auf Basis der erfassten Bewertungssignale erzeugt (S6a) wird.

7. System zur Änderung von Prozessdaten einer Waschanlage (WA) auf Basis von erfassten Bewertungen von Fahrzeugwäschen, die auf der Waschanlage (WA) ausgeführt wurden, mit:
- Einer Menge von mobilen Endgeräten (H), die jeweils ausgebildet sind, ein Verfahren nach einem der vorangehenden Verfahrensansprüche auszuführen;
- Einem Steuermodul (SM), das auf der Waschanlage (WA) implementiert ist und zur Steuerung und/oder Regelung der Waschanlage (WA) auf Basis der erfassten Rückmeldungssignale (rs), die Bewertungen von auf der Waschanlage (WA) ausgeführten Fahrzeugwäschen encodieren, dient und das über die Steuerschnittstelle mit den mobilen Endgeräten (H) in Datenaustausch steht.

8. System nach dem vorangehenden Systemanspruch, bei dem das System weiterhin eine zentrale Verarbeitungseinheit (ZV) umfasst, die in Datenaustausch mit den jeweiligen Steuermodulen (SM) der Waschanlagen (WA) einer Mehrzahl von Waschanlagen (WA) steht und die dazu ausgebildet ist, auf Basis der Rückmeldungssignale (rs) für die Mehrzahl von Waschanlagen (WA), Regelgrößen für die Mehrzahl von Waschanlagen (WA) zu ermitteln.

9. System nach Anspruch 8, bei dem die zentrale Verarbeitungseinheit (ZV) dazu ausgebildet ist, die Rückmeldungssignale (rs) von mehreren Endgeräten (H) in Bezug auf unterschiedliche Waschanlagen auszuwerten und insbesondere zur vergleichenden Auswertung aller Waschanlagen (WA) auszuwerten, so dass für jeweils eine Waschanlage (WA) Benchmark-Werte für jeweils eine Wäsche und/oder für Programmabschnitte einer Wäsche ermittelt werden, die von der zentralen Verarbeitungseinheit (ZV) an die jeweilige Waschanlage (WA) und/oder dieser zugeordneten Instanzen übermittelt werden.

10. System nach Anspruch 8 oder 9, bei dem die Rückmeldungssignale zu einer individuell beanstandeten Wäsche auf dem Steuermodul (SM) und/oder der zentralen Verarbeitungseinheit (ZV) mit lokalen oder zentralen Referenzwerten verglichen werden, um bei Abweichungen eine Abweichungsnachricht zu erzeugen und auszugeben.

11. System nach einem der vorangehenden Systemansprüche, bei dem die Rückmeldungssignale (rs) von mehreren Endgeräten (H) in Bezug auf jeweils eine Waschanlage (WA) ausgewertet werden, um bei statistisch signifikanter Häufung von einem Typ von Rückmeldungssignalen (rs), automatisch Überprüfungsmaßnahmen auf der Waschanlage (WA) und insbesondere für die in den Rückmeldungssignalen (rs) adressierten Arbeitsaggregate (A) eingeleitet werden.

12. System nach dem unmittelbar vorangehenden Anspruch, bei dem die Überprüfungsmaßnahmen einen Vergleich mit einem vorkonfigurierbaren Referenzwert oder Referenzwertbereich in Bezug auf den Typ des Rückmeldungssignals (rs) und/oder eine lokale Überprüfung eines Arbeitsaggregates (A) der Waschanlage (WA) im Rahmen einer prädiktiven Instandhaltungsprozedur umfassen.

13. System nach einem der vorangehenden Systemansprüche, bei dem das Steuermodul (SM) dazu eingerichtet ist, Prozessdaten von aktivierten Arbeitsaggregaten (A) im Rahmen von auf der Waschanlage (WA) ausgeführten Wäschen in einem Speicher zu speichern und wobei das Steuermodul (SM) weiter dazu eingerichtet ist, die von dem mobilen Endgerät (H) über die Steuerschnittstelle (STS) empfangenen Rückmeldungssignale (rs) mit den gespeicherten Prozessdaten zu korrelieren, insbesondere positions-basiert zu korrelieren, um Überprüfungsmaßnahmen nur für ausgewählte Arbeitsaggregate (A) einzuleiten, nämlich für solche Arbeitsaggregate (A), die bei der Wäsche in den beanstandeten Bereichen aktiviert wurden.

14. Steuermodul (SM) für ein System nach einem der vorangehenden Systemansprüche, mit:
- Einer Steuerschnittstelle (STS) zu einer Menge von mobilen Endgeräten (H), die jeweils ausgebildet sind, ein Verfahren nach einem der vorangehenden Verfahrensansprüche auszuführen;
- wobei das Steuermodul (SM) auf der Waschanlage (WA) implementiert ist und zum Empfang von erzeugten Rückmeldungssignalen (rs) dient, wobei die Rückmeldungssignale (rs) die identifizierten beanstandeten Bereiche encodieren und wobei das Steuermodul (SM) zur Steuerung und/oder Regelung der Arbeitsaggregate (A) der Waschanlage (WA) auf Basis der erfassten Rückmeldungssignale (rs) zu bisher auf der Waschanlage (WA) ausgeführten Fahrzeugwäschen dient.

15. Computerprogramm, wobei das Computerprogramm in eine Speichereinheit einer Recheneinheit ladbar ist und Programmcodeabschnitte enthält, um die Recheneinheit zu veranlassen, das Verfahren zur Bewertung einer Fahrzeugwäsche, das auf einer Waschanlage (WA) ausgeführt wurde, gemäß einem der Verfahrensansprüche auszuführen, wenn das Computerprogramm in der Recheneinheit ausgeführt wird.

16. Computerprogramm, wobei das Computerprogramm in eine Speichereinheit einer Recheneinheit ladbar ist und Programmcodeabschnitte enthält, um die Recheneinheit zu veranlassen, Verfahrensschritte zur Änderung von Prozessdaten einer Waschanlage (WA) auf Basis von erfassten Bewertungen von Fahrzeugwäschen, die auf der Waschanlage (WA) ausgeführt wurden, gemäß einem der Systemansprüche und/oder dem Steuermodulanspruch auszuführen, wenn das Computerprogramm in der Recheneinheit ausgeführt wird.

## Claims

1. Computer-implemented method for evaluating a vehicle wash performed on a washing system, comprising the following method steps performed at least partially on a mobile terminal (H):
- Providing (S1) of a human-machine interface (HMI) and a control interface (STS) to a control module (SM) of the washing system (WA);
- Outputting (S2) fields on the human-machine interface (HMI) that are used to detect at least one evaluation signal (S3) in order to evaluate the wash;
- When a negative evaluation signal is detected: Reading (S4) of a generated interactive virtualized representation of the vehicle and output on the human-machine interface (HMI) of the mobile device (H);
- Output (S5) of a request (AF) on the human-machine interface (HMI) to activate objectionable areas in the interactive virtualized representation (V) by means of activation signals (as), whereby the objectionable areas are objected to with regard to a washing quality;
- Detecting (S6) of activation signals (as) in the interactive virtualized representation (V);
- Reading in an identification (S7) of the objectionable areas on the vehicle on the basis of the detected activation signals (as);
- Generating (S8) of feedback signals (rs) for forwarding (S9) to the control module (SM) via the control interface (STS), whereby the feedback signals (rs) encode the identified objectionable areas.

2. Method according to claim 1, wherein the generated interactive virtualized representation of the vehicle is vehicle type-specific or vehicle-specific.

3. Method according to any one of the preceding claims, wherein generating (S4) the interactive virtualized representation of the vehicle is performed in response to sensor data and/or with access to a stored feature model (FM) encoding the contour of the vehicle or vehicle type concerned, in particular in response to a captured vehicle model data set and a captured year of manufacture data set.

4. Method according to any one of the preceding claims, wherein the feedback signals (rs) comprise status signals specifying the executed wash.

5. Method according to any one of the preceding claims, wherein the feedback signals (rs) comprise meta information on the wash performed, on the vehicle, on the washing system (WA) with which the wash has been performed and/or on the evaluation signal.

6. Method according to any one of the preceding claims, wherein an adaptive dialog menu is provided (S6b) on the human-machine interface (HMI) for specifying the ratings, which is adaptively generated (S6a) based on the detected rating signals.

7. System for changing process data of washing system (WA) on the basis of recorded evaluations of vehicle washes carried out on the washing system (WA):
- A set of mobile terminals (H) each adapted to perform a method according to any one of the preceding method claims;
- A control module (SM), which is implemented on the washing system (WA) and is used to control and/or regulate the washing system (WA) on the basis of the recorded feedback signals (rs), which encode evaluations of vehicle washes carried out on the washing system (WA), and which exchanges data with the mobile terminals (H) via the control interface.

8. System according to the preceding system claim, in which the system further comprises a central processing unit (ZV) which is in data exchange with the respective control modules (SM) of the washing systems (WA) of a plurality of washing systems (WA) and which is designed to determine control variables for the plurality of washing systems (WA) on the basis of the feedback signals (rs) for the plurality of washing systems (WA).

9. System according to claim 8, in which the central processing unit (ZV) is designed to evaluate the feedback signals (rs) from a plurality of mobile terminals (H) in relation to different washing systems and in particular to evaluate them for comparative evaluation of all washing systems (WA), so that benchmark values are determined for one washing system (WA) in each case for one wash in each case and/or for program sections of a wash, which are transmitted by the central processing unit (ZV) to the respective washing system (WA) and/or instances assigned to it.

10. System according to claim 8 or 9, in which the feedback signals for an individually rejected wash on the control module (SM) and/or the central processing unit (ZV) are compared with local or central reference values in order to generate and output a deviation message in the event of deviations.

11. System according to one of the preceding system claims, in which the feedback signals (rs) from a plurality of mobile terminals (H) are evaluated in relation to a respective washing system (WA) in order to automatically initiate checking measures on the washing system (WA) and in particular for the working units (A) addressed in the feedback signals (rs) in the event of a statistically significant accumulation of one type of feedback signals (rs).

12. System according to the immediately preceding claim, wherein the checking measures comprise a comparison with a preconfigurable reference value or reference value range with respect to the type of feedback signal (rs) and/or a local check of a working unit (A) of the washing system (WA) as part of a predictive maintenance procedure.

13. System according to one of the preceding system claims, in which the control module (SM) is set up to store process data of activated working units (A) in a memory in the context of washes carried out on the washing system (WA), and wherein the control module (SM) is further set up for this purpose, correlating the feedback signals (rs) received from the mobile terminal (H) via the control interface (STS) with the stored process data, in particular position-based correlation, in order to initiate inspection measures only for selected working units (A), namely for those working units (A) which were activated during the wash in the objectionable areas.

14. Control module (SM) for a system according to any one of the preceding system claims, comprising:
- A control interface (STS) to a set of mobile terminals (H), each of which is adapted to carry out a method according to one of the preceding method claims;
- wherein the control module (SM) is implemented on the washing system (WA) and is used to receive generated feedback signals (rs), wherein the feedback signals (rs) encode the identified objectionable areas and wherein the control module (SM) is used to control and/or regulate the working units (A) of the washing system (WA) on the basis of the detected feedback signals (rs) for vehicle washes previously carried out on the washing system (WA).

15. Computer program, the computer program being loadable into a memory unit of a computing unit and including program code portions for causing the computing unit to execute the method of evaluating a vehicle wash performed on a washing system (WA) according to any one of the method claims when the computer program is executed in the computing unit.

16. Computer program, wherein the computer program is loadable into a memory unit of a computing unit and contains program code sections to cause the computing unit to execute method steps for changing process data of a washing system (WA) based on detected evaluations of vehicle washes performed on the washing system (WA) according to one of the system claims and/or the control module claim when the computer program is executed in the computing unit.

## Revendications

1. Procédé mis en oeuvre par ordinateur pour évaluer un lavage de véhicule effectué sur une installation de lavage, comprenant les étapes de procédé suivantes, qui sont exécutées au moins partiellement sur un terminal mobile (H) :
- fournir (S1) une interface homme-machine (HMI) et une interface de commande (STS) à un module de commande (SM) de l'installation de lavage (WA) ;
- émettre (S2) des champs sur l'interface homme-machine (HMI), qui servent à détecter (S3) au moins un signal d'évaluation, afin d'évaluer le linge ;
- en cas de détection d'un signal d'évaluation négatif : lecture (S4) d'une représentation virtualisée interactive générée du véhicule et sortie sur l'interface homme-machine (HMI) du terminal mobile (H) ;
- émettre (S5) une demande (AF) sur l'interface homme-machine (HMI) d'activer des zones contestées dans la représentation virtualisée interactive (V) au moyen de signaux d'activation (as), les zones contestées étant contestées en ce qui concerne une qualité de lavage ;
- la détection (S6) de signaux d'activation (as) dans la représentation virtualisée interactive (V) ;
- la lecture d'une identification (S7) des zones incriminées sur le véhicule sur la base des signaux d'activation détectés (as) ;
- générer (S8) des signaux de retour d'information (rs) pour les transmettre (S9) au module de commande (SM) via l'interface de commande (STS), les signaux de retour d'information (rs) encodant les zones défectueuses identifiées.

2. Procédé selon la revendication 1, dans lequel la représentation virtualisée interactive du véhicule qui est générée est spécifique au type de véhicule ou spécifique au véhicule.

3. Procédé selon l'une des revendications précédentes, dans lequel la génération (S4) de la représentation virtualisée interactive du véhicule s'effectue en réponse à des données de capteurs et/ou en accédant à un modèle de caractéristiques (FM) mémorisé qui code le contour du véhicule ou du type de véhicule concerné, notamment en réponse à un jeu de données de modèle de véhicule saisi et à un jeu de données d'année de construction saisi.

4. Procédé selon l'une quelconque des revendications précédentes, dans lequel les signaux de retour d'information (rs) comprennent des signaux d'état spécifiant le lavage effectué.

5. Procédé selon l'une quelconque des revendications précédentes, dans lequel les signaux de retour d'information (rs) comprennent des méta-informations relatives au lavage effectué, au véhicule, à l'installation de lavage (WA) avec laquelle le lavage a été effectué et/ou au signal d'évaluation.

6. Procédé selon l'une quelconque des revendications précédentes, dans lequel un menu de dialogue adaptatif est fourni (S6b) sur l'interface homme-machine (HMI) pour spécifier les évaluations, qui est généré (S6a) de manière adaptative sur la base des signaux d'évaluation détectés.

7. Système pour modifier les données de processus d'une installation de lavage (WA) sur la base d'évaluations saisies de lavages de véhicules effectués sur l'installation de lavage (WA), comprenant
- un ensemble de terminaux mobiles (H), dont chacun est conçu pour mettre en oeuvre un procédé selon l'une des revendications de procédé précédentes ;
- un module de commande (SM) qui est implémenté sur l'installation de lavage (WA) et qui sert à commander et/ou à régler l'installation de lavage (WA) sur la base des signaux de rétroaction (rs) détectés, qui encodent des évaluations de lavages de véhicules effectués sur l'installation de lavage (WA), et qui est en échange de données avec les terminaux mobiles (H) par l'intermédiaire de l'interface de commande.

8. Système selon la revendication précédente du système, dans lequel le système comprend en outre une unité centrale de traitement (ZV) qui est en échange de données avec les modules de commande respectifs (SM) des installations de lavage (WA) d'une pluralité d'installations de lavage (WA) et qui est conçue pour déterminer des grandeurs de régulation pour la pluralité d'installations de lavage (WA) sur la base des signaux de rétroaction (rs) pour la pluralité d'installations de lavage (WA).

9. Système selon la revendication 8, dans lequel l'unité centrale de traitement (ZV) est conçue pour évaluer les signaux de rétroaction (rs) de plusieurs terminaux mobiles (H) en ce qui concerne différentes installations de lavage et notamment pour l'évaluation comparative de toutes les installations de lavage (WA), de sorte que des valeurs de référence sont déterminées pour respectivement une installation de lavage (WA) pour respectivement un lavage et/ou pour des sections de programme d'un lavage, qui sont transmises par l'unité centrale de traitement (ZV) à l'installation de lavage respective (WA) et/ou à des instances associées à celle-ci.

10. Système selon la revendication 8 ou 9, dans lequel les signaux de retour d'information concernant un linge contesté individuellement sont comparés, sur le module de commande (SM) et/ou l'unité centrale de traitement (ZV), à des valeurs de référence locales ou centrales, afin de générer et d'émettre un message d'écart en cas de divergence.

11. Système selon l'une des revendications précédentes du système, dans lequel les signaux de rétroaction (rs) de plusieurs terminaux mobiles (H) sont évalués en ce qui concerne respectivement une installation de lavage (WA), afin de déclencher automatiquement, en cas d'accumulation statistiquement significative d'un type de signaux de rétroaction (rs), des mesures de contrôle sur l'installation de lavage (WA) et notamment pour les groupes de travail (A) adressés dans les signaux de rétroaction (rs).

12. Système selon la revendication immédiatement précédente, dans lequel les mesures de vérification comprennent une comparaison avec une valeur de référence ou une plage de valeurs de référence préconfigurable en ce qui concerne le type de signal de retour d'information (rs) et/ou une vérification locale d'un groupe de travail (A) de l'installation de lavage (WA) dans le cadre d'une procédure de maintenance prédictive.

13. Système selon l'une des revendications de système précédentes, dans lequel le module de commande (SM) est agencé pour stocker dans une mémoire des données de processus d'unités de travail activées (A) dans le cadre de lavages effectués sur l'installation de lavage (WA) et dans lequel le module de commande (SM) est en outre agencé pour, de corréler les signaux de retour (rs) reçus par le terminal mobile (H) par l'intermédiaire de l'interface de commande (STS) avec les données de processus mémorisées, en particulier de les corréler sur la base de la position, afin de déclencher des mesures de vérification uniquement pour des groupes de travail (A) sélectionnés, à savoir pour les groupes de travail (A) qui ont été activés lors du lavage dans les zones incriminées.

14. Module de commande (SM) pour un système selon l'une quelconque des revendications précédentes, comprenant :
- une interface de commande (STS) vers un ensemble de terminaux mobiles (H), qui sont chacun conçus pour exécuter un procédé selon l'une des revendications de procédé précédentes ;
- le module de commande (SM) étant mis en oeuvre sur l'installation de lavage (WA) et servant à la réception de signaux de rétroaction (rs) générés, les signaux de rétroaction (rs) encodant les zones défectueuses identifiées et le module de commande (SM) servant à la commande et/ou à la régulation des groupes de travail (A) de l'installation de lavage (WA) sur la base des signaux de rétroaction (rs) détectés concernant des lavages de véhicules exécutés jusqu'à présent sur l'installation de lavage (WA).

15. Programme informatique, le programme informatique pouvant être chargé dans une unité de mémoire d'une unité de calcul et comprenant des sections de code de programme pour amener l'unité de calcul à exécuter le procédé d'évaluation de lavage de véhicule exécuté sur une installation de lavage (WA) selon l'une quelconque des revendications de procédé lorsque le programme informatique est exécuté dans l'unité de calcul.

16. Programme informatique, le programme informatique pouvant être chargé dans une unité de mémoire d'une unité de calcul et comprenant des sections de code de programme pour amener l'unité de calcul à exécuter des étapes de procédé pour modifier des données de traitement d'une installation de lavage (WA) sur la base d'évaluations détectées de lavages de véhicules effectués sur l'installation de lavage (WA), conformément à l'une quelconque des revendications de système et/ou de la revendication de module de commande, lorsque le programme informatique est exécuté dans l'unité de calcul.
